# EUROPEAN PATENT APPLICATION

(11) **EP 2 851 694 A1**
(43) Date of publication of application: **25.03.2015**
(21) Application number: 13275228.8
(22) Date of filing: 24.09.2013
(51) Int. Cl.: G01R 31/00, G01D 11/28

(54) **Test fitment**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

The invention relates to a removable test fitment which may be readily locatable to remove it from a complex system, specifically to the removal of test fitments which are installed in low light or confined spaces.

There is provided a removable test fitment suitable for use to temporarily monitor a complex system, wherein said removable test fitting comprises an indicator to identify the presence of the component within the complex system.

## Description

The invention relates to a removable test fitment which may be readily locatable to remove it from a complex system, specifically removal of test fitments which are installed in low light or confined spaces, such as those on a boat or ship's system.

Test fitments may be used to monitor the performance of complex systems, some of which may be high energy systems, such as, for example pressurised systems, extreme temperatures, or electrical power, , which may be temporarily integrated into a complex system to monitor and test the operation of that system.

According to a first aspect of the invention there is provided a removable test fitment suitable for use to temporarily monitor a complex system, wherein said removable test fitting comprises an indicator to identify the presence of the component within the complex system, such as to facilitate subsequent removal.

Typically the test fitment is only suitable for use as either all of or part of a means of monitoring and testing, and may not be sufficiently robust to be permanently integrated into the complex system or may alter that systems design intent. Therefore there is a requirement to be achieve high confidence that after a monitoring or test period that the test fitment has been removed. The test fitment may be a diagnostic device or an operable link between the complex system and a further diagnostic device. The diagnostic device or further diagnostic device may be mechanical or electrical, which is temporary inserted or attached to allow diagnostic assessment of a complex system. The mechanical diagnostic device may be such as, for example a pressure indicator, flow meter, sensor, typically examples of an electrical or electronic diagnostic devices may be multimeters, computers or the likes.

Some, part or all of the test fitment may comprise at least one visual indicator. It may be desirable that the test fitment is used as a removable operable link, which interfaces or links the complex system and a further diagnostic system. This allows the ready use of existing diagnostic devices, with a detectable operable link.

The indicator may be selected from at least one of a visual, audible, tactile or an EMF active indicator, preferably at least two different indicators are used. In a highly preferred arrangement there are at least two indicators, so as to increase the chances of detection and removal of the test fitment after use.

The visual indicator may comprise a coloured indicator, such a colour with a high contrast to the surrounding complex system, preferably a bold primary colour. In a highly preferred arrangement a UV active indicator such as UV active paint or pigment or layer coating is applied to the test fitment. The UV active indicator may be a florescent or phosphorescent coating, paint or layer.

The visual indicator and UV active indicator may be applied to one or more surfaces of a test fitment or may be applied to an applique layer or label wherein said applique or label are affixed to the test fitment.

The visual indicator may be passive such as, for example a paint or UV indicator as defined earlier or it may be an active indicator such that the fitment comprises a light source, such as an LED or OLED. The light source may be pulsed or continuous output. The light source may be activated manually, by the step of installing the test fitment into the complex system, or in response to an external stimulus, such as for example an interrogating EMF signal. Deactivation of the light source may then be caused by removal of the test fitment from the complex system.

The visual and particularly the coloured indicator may be in the form of a highly distinguishing motif, optical pattern or icon. The optical pattern may be a coded pattern such as a machine readable code, such as, for example, a barcode, 2D code, QR code, one in which serves to store information about the test fitment and its usage profile. The coded pattern may also provide an augmented reality effect, such that if a camera or scanning device detects the pattern it provides a further indicator via a processing means to indicate the presence of a test fitment. The use of mobile phones or cameras, may be readily used which with Augmented reality provide a large message that appears on a screen when a coded pattern is observed.

According to a further aspect of the invention there is provided a method of removing a removable test fitment which is used in the temporary monitoring a complex system, comprising the steps of, determining the presence of the indicator, removing the removable test fitment from said complex system.

The step of determining the presence of said indicator is caused by interrogating said indicator, typically be applying at least one stimuli to cause a detectable output. There may be more than one stimulus applied, or applied over a range of operations, such as, for example frequencies wavelengths, amplitudes etc.

Preferably the indicator is selected such that upon interrogation by at least one stimulus, a detectable output is readily observed, such as for example a visual, audible or combination thereof.

In a highly preferred arrangement the interrogation step is caused by applying at least one stimulus of UV light, RF pulse or magnetic pulse.

Whilst the invention has been described above, it extends to any inventive combination of the features set out above, or in the following description, drawings or claims.

Exemplary embodiments of the device in accordance with the invention will now be described with reference to the accompanying drawings in which:-
Figure 1 shows a side view of a red 90° pressure tube fitment
Figure 2 shows the figure 1 fitment under UV light

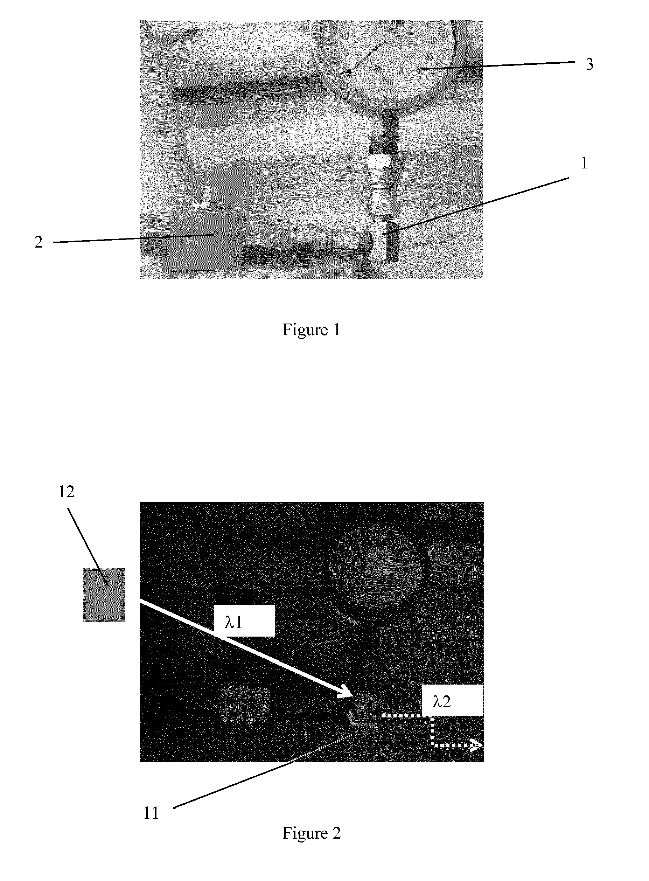

Turning to figure 1 there is shown a red coloured removable test fitment 1, which operably links a diagnostic device 3, in this case a pressure gauge, to test the pressure of a gas in a complex system 2.

Figure 2 shows a test fitment 11 in the same arrangement as shown in Figure 1. An interrogation stimuli 12, in the form of a UV lamp is caused to illuminate the test fitment 11, with a wavelength λ1 in the ultraviolet EM spectrum which when it impinges on a UV active compound, causes light of wavelength λ2, to be emitted, which is in the visible part of the spectrum, and the florescence can be readily observed by the naked eye.

## Claims

1. A removable test fitment suitable for use to temporarily monitor a complex system, wherein said removable test fitting comprises an indicator to identify the presence of the component within the complex system.

2. A fitment according to claim 1, wherein the indicator is selected from at least one of a visual, audible, tactile or an EMF active indicator.

3. A fitment according to claim 2, wherein there are at least two indicators.

4. A fitment according to claim 2 or 3, wherein the visual indicator comprises a coloured indicator and a UV active indicator.

5. A fitment according to claim 4, wherein the UV active indicator is florescent or phosphorescent.

6. A fitment according to any one of claims 2 to 4, wherein the visual indicator comprises a light source.

7. A fitment according to any one of claims 4 to 6, wherein the coloured indicator comprises a motif, optical pattern or icon.

8. A fitment according to any one of the preceding claims wherein the removable test fitment operably links the complex system to a diagnostic system.

9. A method of removing a removable test fitment which is used in the temporary monitoring a complex system, comprising the steps of, determining the presence of the indicator, removing the removable test fitment from said complex system.

10. A method according to claim 9, wherein the step of determining the presence of said indicator is caused by interrogating said indicator with at least one stimuli, to cause a detectable output.

11. A method according to claim 9, wherein the stimuli is at least one of UV light, an RF pulse or a magnetic pulse.

12. A device substantially as described herein with reference to the accompanying drawings.
